# EUROPEAN PATENT SPECIFICATION

(11) **EP 4 339 027 B1**
(45) Date of publication and mention of the grant of the patent: **01.10.2025**
(21) Application number: 23193770.7
(22) Date of filing: 28.08.2023
(51) Int. Cl.: B60R 1/26

(54) **VEHICLE REAR SIDE IMAGE DISPLAY DEVICE**
FAHRZEUGHECKBILDANZEIGEVORRICHTUNG
DISPOSITIF D'AFFICHAGE D'IMAGE CÔTÉ ARRIÈRE DE VÉHICULE

(30) Priority: 09.09.2022 JP 2022143403
(43) Date of publication of application: 20.03.2024
(73) Proprietor: Alps Alpine Co., Ltd., Ota-ku, Tokyo 145-8501 (JP)
(72) Inventor: Honda, Keisuke, Iwaki-city, Fukushima (JP)
(74) Representative: Schmitt-Nilson Schraud Waibel Wohlfrom Patentanwälte Partnerschaft mbB

(56) References cited:
- EP-A1- 3 276 252
- WO-A1-2018/020936
- DE-A1- 102020 006 720
- US-B2- 11 256 931

## Description

The present invention relates to a vehicle rear side image display device that is mounted on a vehicle and images and displays a rear side.

A periphery monitoring system as an electronic mirror configured to display a rear side picture corresponding to a reflected image of a door mirror on a display in a vehicle interior (e.g., see JP 2014-116756 A) is known. In order to enable a driver to discriminate between an actual view and a reflected image reflected on a side surface of a vehicle body of the own vehicle, this periphery monitoring system performs image processing for clarifying a boundary on the vehicle body side. Specifically, the periphery monitoring system (1) reduces luminance of all pixels on the vehicle body side, (2) writes RGB values corresponding to the vehicle body color, and (3) performs image processing only in an edge region of the vehicle body.

In the case of checking the rear through the door mirror having a mirror surface, when a distance rearward the vehicle is viewed (when the distance is in focus), the side surface of the vehicle body near the door mirror is not in focus and looks blurred.

On the other hand, in the case of the electronic mirror, since a camera that images the rear of the vehicle usually has a deep subject depth (depth of field) of about 1 m to ∞, a wide range from the rear of the vehicle to the side surface of the vehicle body included in the imaging range is in focus, and a clear picture is obtained for the entire imaging range. Therefore, there has been a problem that a succeeding vehicle or the like reflected on the side surface of the vehicle body included in the imaging range is in focus similarly to other succeeding vehicles or the like, and a sense of depth is lost. Therefore, when a user (driver) who is accustomed to a vehicle with a door mirror having a mirror surface switches to a vehicle with an electronic mirror type door mirror, the user feels a feeling of strangeness until the user gets used to the vehicle.

EP 3 276 252 A1, showing the preamble of claim 1, discloses an image pickup device for vehicle comprising a camera module of which a capturing range is set as a region ranging from the rear to the side, including a part of a side surface of a vehicle body, wherein when an image is captured and displayed on a screen by the camera module, at least the part of the side surface is covered or made unclear on the screen by an image distinction means, so that the side surface and a part except for the side surface are visually distinguished.

WO 2018/020936 A1 discloses a vehicle periphery monitoring device provided with an image capturing unit capable of capturing an image of the periphery of the vehicle, an image processing unit and a display unit, wherein the image processing unit is provided with a flicker correcting unit which is capable of carrying out correction if the image captured by the image capturing unit contains flicker, in such a way as to alleviate flicker in the image displayed by the display unit.

An object of the present invention is to provide a vehicle rear side image display device that can prevent a loss of depth feeling at the time of displaying an image of vehicle rear side imaged by a camera and display an image without a feeling of strangeness.

The invention relates to a vehicle rear side image display device according to the appended claims. Embodiments are disclosed in the dependent claims.

A vehicle rear side image display device according to the present invention has the features of claim 1 and includes: an imaging means configured to image a rear side of an own vehicle; a partial extraction means configured to extract a partial image that is a part of an image imaged by the imaging means, the partial image corresponding to an imaging range close to the imaging means; a blur processing means configured to perform blur processing on the partial image; and a display means configured to display an entire rear image including an image after the blur processing by the blurring means and an image that is a part of the image imaged by the imaging means, the image being other than the partial image.

Particularly, the image being other than the partial image is displaying a region corresponding to a distant view and the partial image is corresponding to an imaging range closer than that. When the rear side image imaged by the imaging means is displayed, by not displaying an in-focus image of the entire imaging range but clearly displaying a region corresponding to a distant view that the user (driver) is to view and displaying, in a blurring manner, a region (partial image) closer than that, this can provide a display image in a blurred manner in accordance with the distance as in a case where the user views a door mirror having a mirror surface, prevent a loss of a feeling of depth, and display an image free from a feeling of strangeness.

The blur processing is preferably processing of reducing the resolution of the image. It is possible to blur a partial image by simple processing of reducing the resolution.

The partial image is preferably an image corresponding to the side surface of the vehicle body of the own vehicle attached with the imaging means. This can avoid a succeeding vehicle or the like from being clearly reflected on the side surface of the vehicle body to attract the attention of the user.

The partial image that is a target of blur processing by the blur processing means is preferably an image corresponding to a region excluding an end of the side surface of the vehicle body. The clear image of the end of the side surface of the vehicle body makes it easily understood the boundary between the side surface of the vehicle body and the others, and makes it easily grasped the relative distance between the own vehicle and the succeeding vehicle traveling behind the own vehicle.

In a case where the partial image includes a tire, the blur processing means preferably performs blur processing on the partial image excluding the tire. Sight of the clear image of the tire facilitates the driving operation at the time of pulling the own vehicle over or moving the own vehicle rearward.

The blur processing means increases the degree of blurring of the partial image as getting closer to the imaging means. The blurring method appropriate to the characteristics of human eyes can further reduce the feeling of strangeness at the time of viewing the image.

The blur processing means preferably increases the degree of blurring of the partial image as the speed of the own vehicle increases. As the speed increases, it is necessary to pay attention to approach of a distant succeeding vehicle particularly at the time of high-speed traveling. Therefore, by increasing the degree of blurring of the image of the vicinity of the own vehicle, it is possible to encourage a gaze to the distant succeeding vehicle or the like.

The blur processing means preferably reduces the degree of blurring of the partial image when the own vehicle moves rearward as compared with when the own vehicle moves forward. When the own vehicle moves rearward, it is also necessary to gaze the vicinity of the own vehicle. Therefore, reduction in the degree of blurring of this region facilitates the driving operation at the time of moving the own vehicle rearward.

Fig. 1 is a view illustrating a configuration of a vehicle rear side image display device of an embodiment.
Fig. 2A and 2B are views illustrating an example of an entire left rear side image.
Fig. 3 is a view illustrating an example of an entire left rear side image of a variation.
Fig. 4 is a view illustrating an example of an entire left rear side image of another variation.
Fig. 5 is a view illustrating an example of an entire left rear side image of according to an embodiment of the invention.
Fig. 6 is a view illustrating a configuration of a vehicle rear side image display device of another variation.

Hereinafter, a vehicle rear side image display device according to embodiments to which the present invention maybe applied will be described with reference to the drawings.

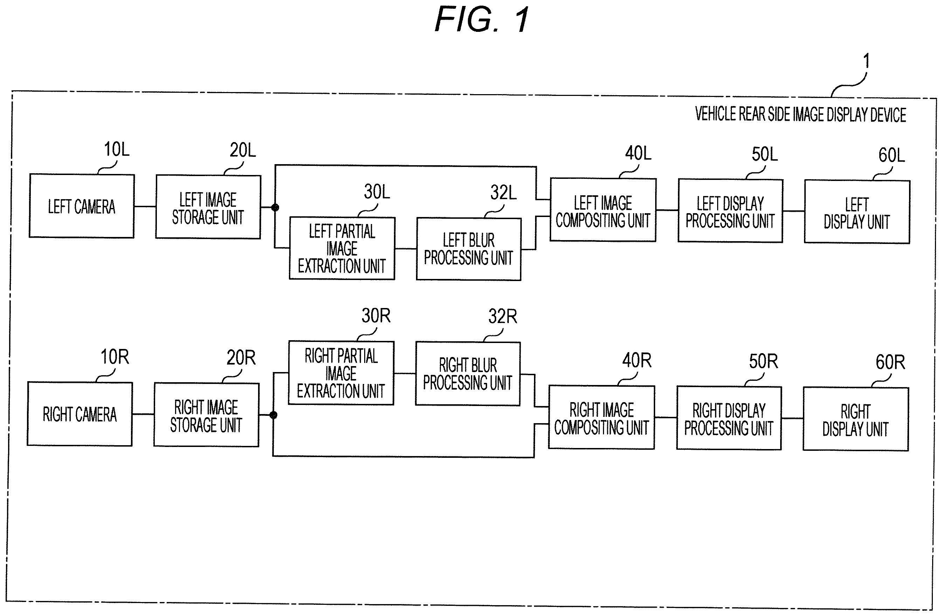

Fig. 1 is a view illustrating a configuration of a vehicle rear side image display device of an embodiment. As illustrated in Fig. 1, a vehicle rear side image display device 1 of the present embodiment includes a left camera 10L, a right camera 10R, a left image storage unit 20L, a right image storage unit 20R, a left partial image extraction unit 30L, a left blur processing unit 32L, a right partial image extraction unit 30R, a right blur processing unit 32R, a left image compositing unit 40L, a right image compositing unit 40R, a left display processing unit 50L, a right display processing unit 50R, a left display unit 60L, and a right display unit 60R.

The left camera 10L images the rear side of the left side of the vehicle such that a region reflected on a door mirror as viewed from the driver of the vehicle is included in the imaging range on an assumption of including a physical left-side door mirror. The right camera 10R images the rear side of the right side of the vehicle such that a region reflected on a door mirror as viewed from the driver of the vehicle is included in the imaging range on an assumption of including a physical right-side door mirror. The left camera 10L and the right camera 10R each have a deep subject depth, and can image, in an in-focus state, a wide range of subjects from a near view including the side surface of the vehicle body of the own vehicle to a distant view including a succeeding vehicle, a building, and a tree. Note that the vehicle of the present embodiment does not include left and right door mirrors, and instead, displays images obtained by imaging by the left camera 10L and the right camera 10R.

An image (left rear side image) obtained by imaging by the left camera 10L is stored in the left image storage unit 20L. An image (right rear side image) obtained by imaging by the right camera 10R is stored in the right image storage unit 20R.

The left partial image extraction unit 30L extracts a left partial image corresponding to an imaging range close to the left camera 10L from among the left rear side images imaged by the left camera 20L and stored in the left image storage unit 10L. For example, this left partial image is an image corresponding to the left side surface of the vehicle body of the own vehicle attached with the left camera 10L (an image obtained by imaging the left side surface of the vehicle body using the left camera 10L).

Several cases are conceivable as an extraction method of a partial image. The present embodiment assumes that the vehicle rear side image display device 1 is used as an electronic mirror instead of the left and right door mirrors. Therefore, the attachment positions of the left camera 10L and the right camera 10R are determined for each vehicle type, and the ranges of the side surfaces of the vehicle body included in these imaging ranges also do not vary for each vehicle. Therefore, by examining this range in advance, it is possible to extract a partial image corresponding to this range. Alternatively, the range of the side surface of the vehicle may be determined each time such as at the time of delivery or at the time of engine start on the basis of the feature amount such as color.

The left blur processing unit 32L performs blur processing on a left partial image extracted by the left partial image extraction unit 30L. For example, this blur processing is processing of reducing the resolution of the partial image. For example, it is conceivable to use Gaussian blurring that blurs an image using a Gaussian function. However, mosaic processing of blurring an image by mosaic processing or the like, which is other blur processing, may be used. Note that the degree of blurring can be changed (adjusted) by varying the width of the Gaussian function to be used (3 σ, 10 σ, or the like) in the case of Gaussian blurring. In the case of mosaic processing, the degree of blurring can be changed (adjusted) by varying the area of one mosaic.

The left image compositing unit 40L generates an entire left rear side image by compositing the image after the blur processing by the left blur processing unit 32L (image corresponding to the left partial image) and another left rear side image. The left display processing unit 50L performs processing of displaying a composite entire left rear side image onto the left display unit 60L. For example, the left display unit 60L is constituted by a liquid crystal display device, and is disposed in the vicinity of the left side end of the dashboard.

In this manner, the entire left rear side image is displayed on the basis of the image imaged by the left camera 10L, but an entire right rear side image is displayed in a similar manner.

The right partial image extraction unit 30R extracts a right partial image corresponding to an imaging range close to the right camera 10R from among the right rear side images imaged by the right camera 20R and stored in the right image storage unit 10R. For example, this right partial image is an image corresponding to the right side surface of the vehicle body of the own vehicle attached with the right camera 10R (an image obtained by imaging the right side surface of the vehicle body using the right camera 10R).

The right blur processing unit 32R performs blur processing on a right partial image extracted by the right partial image extraction unit 30R. For example, this blur processing is processing of reducing the resolution of the partial image (Gaussian blurring, mosaic processing, or the like).

The right image compositing unit 40R generates an entire right rear side image by compositing the image after the blur processing by the right blur processing unit 32R (image corresponding to the right partial image) and another left rear side image. The right display processing unit 50R performs processing of displaying a composite entire right rear side image onto the right display unit 60R. For example, the right display unit 60R is constituted by a liquid crystal display device, and is disposed in the vicinity of the right end of the dashboard.

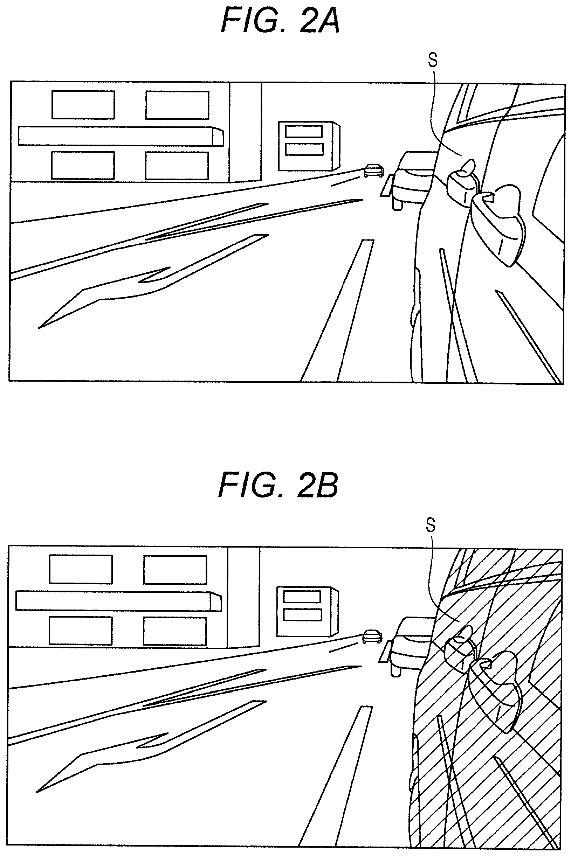

Fig. 2A and 2B are views illustrating an example of an entire left rear side image. Fig. 2A illustrates an image before blur processing, and Fig. 2B illustrates an image after blur processing. In these drawings, S indicates a left partial image included in an entire left side image. In Fig. 2B, hatching indicates that the left partial image S has been subjected to blur processing.

Since the subject depth of the left camera 10L is deep, a succeeding vehicle, a building, and the like reflected by the door knob and the side surface of the vehicle body are clearly reflected in the left partial image S (Fig. 2A) before the blur processing. By performing the blur processing (Gaussian blurring or the like) by the left blur processing unit 32L on the left partial image S, it is possible to reduce the resolution of the left partial image S to obtain a blurred image (Fig. 2B) that does not include a clear boundary line of the door knob, the reflected succeeding vehicle, the building, and the like.

As described above, when displaying a rear side image imaged by the left camera 10L or the right camera 10R, the vehicle rear side image display device 1 of the present embodiment does not display an image in which the entire left rear side image or the entire right rear side image are in focus, but clearly displays a region corresponding to a distant view including a succeeding vehicle or the like that the user (driver) is to view and displays, in a blurred manner, a region (left partial image or right partial image) closer than that. This can provide a display image in a blurred manner in accordance with the distance as in a case where the user views a door mirror having a mirror surface, prevent a loss of a feeling of depth, and display an image free from a feeling of strangeness.

In particular, blur processing for reducing the resolution of an image is used, and a partial image can be blurred by simple processing of reducing the resolution.

By setting the partial image that is a target of blur processing to an image corresponding to the side surface of the vehicle body of the own vehicle attached with the left camera 10L and the right camera 10R, it is possible to avoid a succeeding vehicle or the like from being clearly reflected on the side surface of the vehicle body to attract the attention of the user.

Note that the present invention is not limited to the embodiment described above, and it is possible to perform various variations within a range of the gist of the present invention. For example, in the above-described embodiment, the target of the blur processing is the entire partial image (left partial image or right partial image) corresponding to the side surface of the vehicle body, but this partial image may be limited to a region excluding the end of the side surface of the vehicle body.

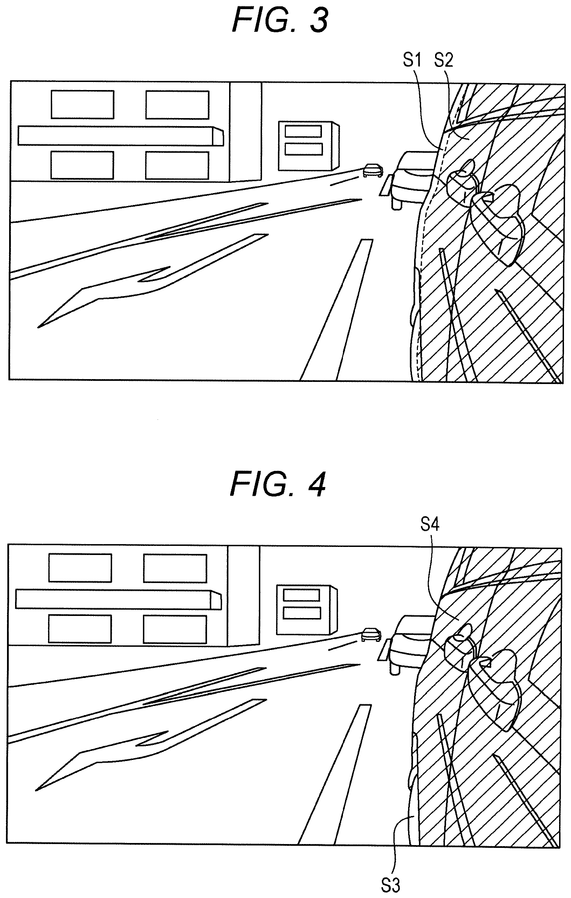

Fig. 3 is a view illustrating an example of an entire left rear side image of a variation. In the variation (variation 1) illustrated in Fig. 3, a left partial image S2 excluding an end S1 on the distant view side (side far from the left camera 10L) of the left side surface of the vehicle body is the target of the blur processing. The entirety of the end S1 and the left partial image S2 put together corresponds to the left partial image S illustrated in Fig. 2A and 2B. A clear image of this end S1 in focus similarly to the distant view behind the own vehicle makes it easily understood the boundary between the left side surface of the vehicle body and the others, and makes it easily grasped the relative distance between the own vehicle and the succeeding vehicle traveling behind the own vehicle.

Fig. 4 is a view illustrating an example of an entire left rear side image of another variation. In the variation (variation 2) illustrated in Fig. 4, a left partial image S4 excluding a tire S3 on the left side surface of the vehicle body is the target of the blur processing. The entirety of the tire S3 and the left partial image S4 put together corresponds to the left partial image S illustrated in Fig. 2A and 2B. When the entire left rear side image is displayed, sight of the clear image of the tire in the driver's field of view facilitates the driving operation at the time of pulling the own vehicle over or reversing the own vehicle.

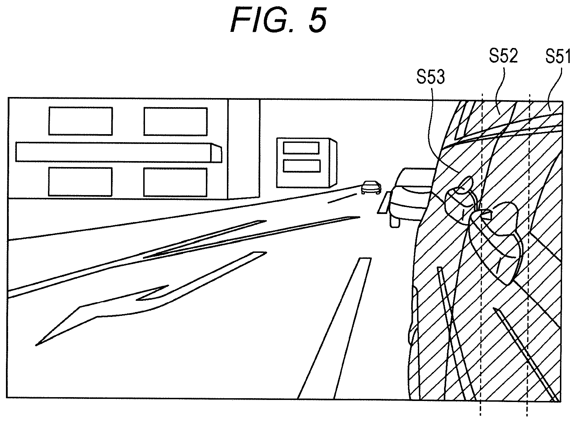

Fig. 5 is a view illustrating an example of an entire left rear side image according to an embodiment of the invention. In the embodiment illustrated in Fig. 5, the left partial image corresponding to the left side surface of the vehicle body includes three left partial images S51, S52, and S53, and the degree of blurring is increased as getting closer to the left camera 10L. That is, the left partial image S51 closest to the left camera 10L has the largest degree of blurring, the left partial image S52 closest next has the second largest degree of blurring, and the farthest left partial image S53 has the smallest degree of blurring. When the driver is looking at a distant vehicle or the like, an object closer to the driver is less in focus. Therefore, the blurring method appropriate to the characteristics of human eyes can further reduce the feeling of strangeness at the time of viewing the entire left rear side image. Note that in this example, the degree of blurring changes in three steps, but may change in two steps, four steps or more, or continuously.

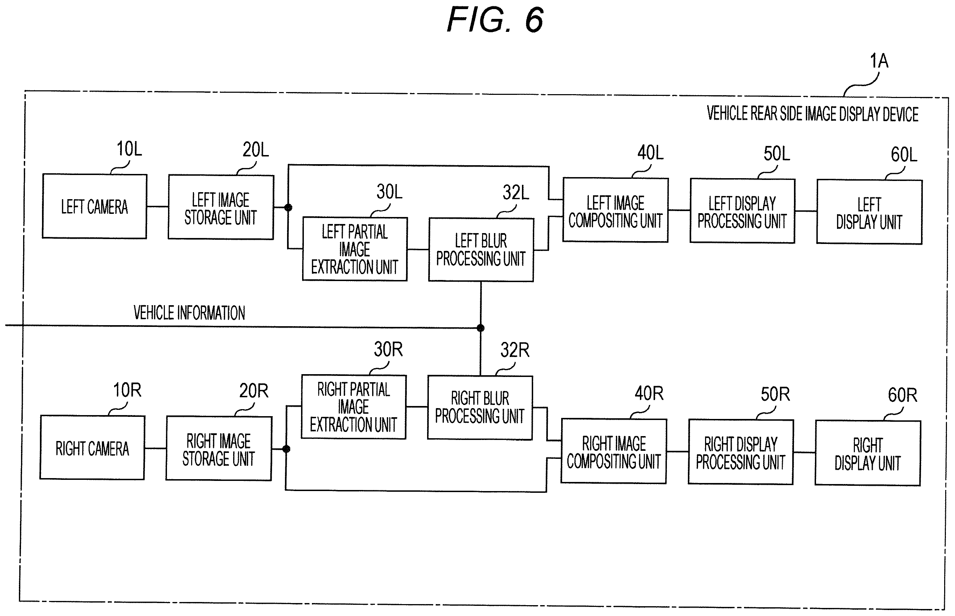

Fig. 6 is a view illustrating the configuration of a vehicle rear side image display device of another variation. A vehicle rear side image display device 1A of the variation (variation 4) illustrated in Fig. 6 is different from the vehicle rear side image display device 1 illustrated in Fig. 1 in that vehicle information including a traveling speed, a shift lever position, and the like of the vehicle is input to each of the left blur processing unit 32L and the right blur processing unit 32R. It is conceivable that the vehicle information is created and input by a vehicle control device that comprehensively controls the vehicle, for example, but a result of individually detecting a traveling speed, a shift lever position, and the like may be directly input.

The left blur processing unit 32L and the right blur processing unit 32R to which such vehicle information is input perform blur processing by setting the degree of blurring of the left and right partial images to be larger as the speed of the own vehicle is higher. As the speed increases, it is necessary to pay attention to approach of a distant succeeding vehicle particularly at the time of high-speed traveling. Therefore, by increasing the degree of blurring of the image of the vicinity of the own vehicle, it is possible to encourage a gaze to the distant succeeding vehicle or the like.

Alternatively, the left blur processing unit 32L and the right blur processing unit 32R to which such vehicle information is input perform blur processing by setting the degree of blurring of the left and right partial images to be smaller when the own vehicle moves rearward than when the own vehicle moves forward. When the own vehicle moves rearward, it is also necessary to gaze the vicinity of the own vehicle. Therefore, reduction in the degree of blurring of this region facilitates the driving operation at the time of moving the own vehicle rearward.

Note that the above-described four variations 1 to 4 may be appropriately combined and used.

As described above, according to the present invention, when the rear side image imaged by the imaging means is displayed, by not displaying an in-focus image of the entire imaging range but clearly displaying a region corresponding to a distant view that the user (driver) is to view and displaying, in a blurring manner, a region closer than that This can provide a display image in a blurred manner in accordance with the distance as in a case where the user views a door mirror having a mirror surface, prevent a loss of a feeling of depth, and display an image free from a feeling of strangeness.

### Reference Signs List

- 1: vehicle rear side image display device
- 10L: left camera
- 10R: right camera
- 20L: left image storage unit
- 20R: right image storage unit
- 30L: left partial image extraction unit
- 30R: right partial image extraction unit
- 32L: left blur processing unit
- 32R: right blur processing unit
- 40L: left image compositing unit
- 40R: right image compositing unit
- 50L: left display processing unit
- 50R: right display processing unit
- 60L: left display unit
- 60R: right display unit

## Claims

1. A vehicle rear side image display device (1) comprising:
an imaging means (10L, 10R) configured to image a rear side of an own vehicle;
a partial extraction means (30L, 30R) configured to extract a partial image that is a part of an image imaged by the imaging means (10L, 10R), the partial image corresponding to an imaging range close to the imaging means (10L, 10R);
a blur processing means (32L, 32R) configured to perform blur processing on the partial image; and
a display means (60L, 60R) configured to display an entire rear image including an image after the blur processing by the blurring means and an image that is a part of the image imaged by the imaging means (10L, 10R), the image being other than the partial image, **characterized in that** the blur processing means (32L, 32R) are configured to increase a degree of blurring of the partial image as getting closer to the imaging means (60L, 60R).

2. The vehicle rear side image display device (1) according to claim 1, wherein the blur processing is processing of reducing a resolution of an image.

3. The vehicle rear side image display device (1) according to claim 1 or 2,
wherein the partial image is an image corresponding to a side surface of a vehicle body of the own vehicle attached with the imaging means (10L, 10R).

4. The vehicle rear side image display device (1) according to claim 3, wherein the partial image that is a target of blur processing by the blur processing means (32L, 32R) is an image corresponding to a region excluding an end of the side surface of the vehicle body.

5. The vehicle rear side image display device (1) according to one of claims 1 - 4, wherein when the partial image includes a tire, the blur processing means (32L, 32R) performs blur processing on the partial image excluding the tire.

6. The vehicle rear side image display device (1) according to one of claims 1 - 5, wherein the blur processing means (32L, 32R) is configured to increase a degree of blurring of the partial image as a speed of the own vehicle increases.

7. The vehicle rear side image display device (1) according to one of claims 1 - 6, wherein the blur processing means (32L, 32R) is configured to reduce a degree of blurring of the partial image when the own vehicle moves rearward as compared with when the own vehicle moves forward.

8. The vehicle rear side image display device (1) according to one of claims 1 - 7, wherein the image being other than the partial image is displaying a region corresponding to a distant view and the partial image is corresponding to an imaging range closer than that.

## Patentansprüche

1. Fahrzeugheckseitenbildanzeigevorrichtung (1), aufweisend:
Abbildungseinrichtungen (10L, 10R), die dazu ausgelegt sind, eine Heckseite eines eigenen Fahrzeugs abzubilden;
Teilextraktionseinrichtungen (30L, 30R), die dazu ausgelegt sind, ein Teilbild zu extrahieren, das ein Teil eines von den Abbildungseinrichtungen (10L, 10R) abgebildeten Bildes ist, wobei das Teilbild einem Abbildungsbereich in der Nähe der Abbildungseinrichtungen (10L, 10R) entspricht;
Unschärfeverarbeitungseinrichtungen (32L, 32R), die dazu ausgelegt sind, eine Unschärfeverarbeitung an dem Teilbild durchzuführen;
Anzeigeeinrichtungen (60L, 60R), die dazu ausgelegt sind, ein gesamtes Heckseitenbild anzuzeigen, das ein Bild nach der Unschärfeverarbeitung durch die Unschärfeeinrichtungen und ein Bild, das ein Teil des von den Abbildungseinrichtungen (10L, 10R) abgebildeten Bildes ist, aufweist, wobei das Bild ein anderes als das Teilbild ist, **dadurch gekennzeichnet, dass** die Unschärfeverarbeitungseinrichtungen (32L, 32R) dazu ausgelegt sind, einen Grad der Unschärfe des Teilbildes bei zunehmender Nähe zu den Abbildungseinrichtungen (60L, 60R) zu erhöhen.

2. Fahrzeugheckseitenbildanzeigevorrichtung (1) nach Anspruch 1, wobei die Unschärfeverarbeitung eine Verarbeitung zur Reduzierung einer Auflösung eines Bildes ist.

3. Fahrzeugheckseitenbildanzeigevorrichtung (1) nach Anspruch 1 oder 2, wobei das Teilbild ein Bild ist, das einer Seitenfläche einer Fahrzeugkarosserie des eigenen Fahrzeugs entspricht, an denen die Abbildungseinrichtungen (10L, 10R) angebracht sind.

4. Fahrzeugheckseitenbildanzeigevorrichtung (1) nach Anspruch 3, wobei das Teilbild, das ein Ziel der Unschärfeverarbeitung durch die Unschärfeverarbeitungseinrichtungen (32L, 32R) ist, ein Bild ist, das einem Bereich ausschließlich eines Endes der Seitenfläche der Fahrzeugkarosserie entspricht.

5. Fahrzeugheckseitenbildanzeigevorrichtung (1) nach einem der Ansprüche 1 - 4, wobei, wenn das Teilbild einen Reifen aufweist, die Unschärfeverarbeitungseinrichtungen (32L, 32R) eine Unschärfeverarbeitung an dem Teilbild ohne den Reifen durchführen.

6. Fahrzeugheckseitenbildanzeigevorrichtung (1) nach einem der Ansprüche 1 - 5, wobei die Unschärfeverarbeitungseinrichtungen (32L, 32R) dazu ausgelegt sind, einen Grad der Unschärfe des Teilbildes zu erhöhen, wenn eine Geschwindigkeit des eigenen Fahrzeugs zunimmt.

7. Fahrzeugheckseitenbildanzeigevorrichtung (1) nach einem der Ansprüche 1 - 6, wobei die Unschärfeverarbeitungseinrichtungen (32L, 32R) dazu ausgelegt sind, einen Grad der Unschärfe des Teilbildes zu reduzieren, wenn sich das eigene Fahrzeug rückwärts bewegt, im Vergleich dazu, wenn sich das eigene Fahrzeug vorwärts bewegt.

8. Fahrzeugheckseitenbildanzeigevorrichtung (1) nach einem der Ansprüche 1 - 7, wobei das andere Bild als das Teilbild einen Bereich anzeigt, der einer Fernsicht entspricht, und das Teilbild einem Abbildungsbereich entspricht, der näher daran ist.

## Revendications

1. Un dispositif d'affichage d'image côté arrière du véhicule (1) comprenant :
un moyen d'imagerie (10L, 10R) configuré pour capter une image d'un côté arrière d'un propre véhicule ;
un moyen d'extraction partielle (30L, 30R) configuré pour extraire une image partielle qui est une partie d'une image captée par le moyen d'imagerie (10L, 10R), l'image partielle correspondant à une plage d'imagerie proche du moyen d'imagerie (10L, 10R) ;
un moyen de traitement de flou (32L, 32R) configuré pour effectuer un traitement de flou sur l'image partielle ;
et
un moyen d'affichage (60L, 60R) configuré pour afficher une image arrière entière incluant une image après le traitement de flou par le moyen de traitement de flou et une image qui est une partie de l'image captée par le moyen d'imagerie (10L, 10R), l'image étant autre que l'image partielle, **caractérisé en ce que** le moyen de traitement de flou (32L, 32R) est configuré pour augmenter le degré de flou de l'image partielle à mesure qu'on se rapproche du moyen d'imagerie (60L, 60R).

2. Le dispositif d'affichage d'image côté arrière du véhicule (1) selon la revendication 1, dans lequel le traitement de flou est un traitement de réduction de la résolution d'une image.

3. Le dispositif d'affichage d'image côté arrière du véhicule (1) selon la revendication 1 ou 2, dans lequel l'image partielle est une image correspondant à une surface latérale d'une carrosserie de véhicule du propre véhicule auquel le moyen d'imagerie (10L, 10R) est attaché.

4. Le dispositif d'affichage d'image côté arrière du véhicule (1) selon la revendication 3, dans lequel l'image partielle qui est une cible de traitement de flou par le moyen de traitement de flou (32L, 32R) est une image correspondant à une région excluant une extrémité de la surface latérale de la carrosserie du véhicule.

5. Le dispositif d'affichage d'image côté arrière du véhicule (1) selon l'une des revendications 1 à 4, dans lequel lorsque l'image partielle inclut un pneu, le moyen de traitement de flou (32L, 32R) effectue un traitement de flou sur l'image partielle excluant le pneu.

6. Le dispositif d'affichage d'image côté arrière du véhicule (1) selon l'une des revendications 1 à 5, dans lequel le moyen de traitement de flou (32L, 32R) est configuré pour augmenter le degré de flou de l'image partielle à mesure que la vitesse du propre véhicule augmente.

7. Le dispositif d'affichage d'image côté arrière du véhicule (1) selon l'une des revendications 1 à 6, dans lequel le moyen de traitement de flou (32L, 32R) est configuré pour réduire le degré de flou de l'image partielle lorsque le propre véhicule recule par rapport à lorsque le propre véhicule avance.

8. Le dispositif d'affichage d'image côté arrière du véhicule (1) selon l'une des revendications 1 à 7, dans lequel l'image étant autre que l'image partielle affiche une région correspondant à une vue distante et l'image partielle correspond à une plage d'imagerie plus proche que celle-ci.
